(19) **Europäisches Patentamt** / **European Patent Office** / **Office européen des brevets**

(11) **EP 4 670 894 A1**

(12) **EUROPEAN PATENT APPLICATION**
published in accordance with Art. 153(4) EPC

(43) Date of publication:
**31.12.2025 Bulletin 2026/01**

(21) Application number: **24810689.0**

(22) Date of filing: **18.03.2024**

(51) International Patent Classification (IPC):
**B23K 9/173** *(2006.01)*    **B23K 9/00** *(2006.01)*
**B23K 9/16** *(2006.01)*    **B23K 35/30** *(2006.01)*

(52) Cooperative Patent Classification (CPC):
**B23K 9/00; B23K 9/16; B23K 9/173; B23K 35/30**

(86) International application number:
**PCT/JP2024/010617**

(87) International publication number:
**WO 2024/241681 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023 JP 2023083832**

(71) Applicant: **JFE STEEL CORPORATION
Tokyo 100-0011 (JP)**

(72) Inventors:
• **Nagao, Ryota
Tokyo 100-0011 (JP)**
• **Kinishi, Kyohei
Tokyo 100-0011 (JP)**
• **Kozuki, Shohei
Tokyo 100-0011 (JP)**
• **Taniguchi, Koichi
Tokyo 100-0011 (JP)**

(74) Representative: **Haseltine Lake Kempner LLP
Bürkleinstrasse 10
80538 München (DE)**

(54) **NARROW-GROOVE GAS-SHIELDED ARC WELDING METHOD**

(57) A welding method is provided, which is a multi-electrode narrow-groove gas-shielded arc welding method that can enable a high welding operation efficiency and can inhibit hot cracking.

A narrow-groove gas-shielded arc welding method includes joining steel plates together by narrow-groove multi-layer welding, the steel plates having a thickness t of 22 mm or greater, the narrow-groove multi-layer welding using a groove angle $\theta$ of 25° or less and a groove root gap $G_0$ of 7 mm to 18 mm, the narrow-groove gas-shielded arc welding method being a method adapted to be used for second and optionally additional layers associated with the multi-layer welding. In the method, the multi-layer welding uses three electrodes; a current value $I_1$ of a first electrode and a current value $I_2$ of a second electrode are each within a range of 260 A to 360 A; and, regarding an ith layer, a current value $I_3^i$ [A] of a third electrode is within a range that satisfies inequality (1), shown below.

$$I_3^i \leq 30 \times G_{i-1} - 10 \qquad (1)$$

In the inequality, $I_3^i$ is the current value [A] of the third electrode regarding the ith layer, $G_{i-1}$ is a width [mm] of a weld bead formed by welding for forming a layer immediately preceding the ith layer (i-1th layer), and i is a positive integer equal to or greater than 2.

EP 4 670 894 A1

# FIG. 1

(a)

(b)

(c)

**Description**

Technical Field

The present invention relates to a gas-shielded arc welding method and, in particular, to a narrow-groove gas-shielded arc welding method that is applied to steel plates having a thickness of 22 mm or greater. As referred to herein, a "narrow groove" is a groove that has a groove angle of 25° or less and in which a width of a minimum groove gap between steel plates that are materials to be welded (base steels) is 50% or less of a thickness of the steel plates.

Background Art

Gas-shielded arc welding, which is used for the operation of welding steel plates, is typically performed by a consumable electrode technique that uses $CO_2$ gas alone or a mixed gas of Ar and $CO_2$ to shield the melted area. Gas-shielded arc welding is widely used in the fields of manufacturing, such as automobiles, buildings, bridges, and electrical equipment.
Steel structures have increased in size and thickness in recent years, and thus, regarding the welding used in the process of their manufacture, particularly, the butt welding of steel plates, an amount of weld deposition has increased, and the welding operation has become very time-consuming, which have resulted in an increase in the cost of the operation.
One possible approach for overcoming this is to use narrow-groove gas-shielded arc welding that performs, by arc welding, multi-layer welding on a groove having a small gap with respect to a thickness. In the case of narrow-groove gas-shielded arc welding, a cross-sectional area of the weld is smaller than that in typical gas-shielded arc welding, and, therefore, narrow-groove gas-shielded arc welding is expected to enable high efficiency and energy saving for welding, and, consequently, reduce the cost of the operation.
Recently, a technology for performing narrow-groove gas-shielded arc welding with multiple electrodes has been proposed. With multi-electrode welding, the amount of deposited metal (metal derived from the melting of a welding wire and adhering to the groove) that is to fill the groove can be increased in proportion to the number of electrodes, and, therefore, a high welding efficiency can be achieved compared with single-electrode welding. Accordingly, multi-electrode welding is an effective means for increasing the efficiency of welding.
Patent Literature 1, for example, discloses a narrow-groove gas-shielded arc welding method for joining steel plates with narrow-groove multi-layer welding. In the case of Patent Literature 1, welding for forming the first layer is performed by multi-electrode welding using two or more electrodes, in which a first electrode and a second electrode are positioned along predetermined parallel weld lines and in which a distance between ends of the welding wires of the first electrode and the second electrode is controlled to be within a range of 5 mm to 16 mm. Patent Literature 1 also states that an angle of a straight line with respect to a direction perpendicular to the weld lines is controlled to be within a range of 45° or less, where the straight line is a line connecting the ends of the welding wires of the first electrode and the second electrode to each other. Patent Literature 1 further states that a melt depth in a root portion of the steel plates is specified to be 1.5 mm or greater, where the melt depth is a depth in a direction perpendicular to the weld line. Patent Literature 1 states that these techniques provide effects of preventing welding defects and improving welding operation efficiency even in a case where groove cutting, for instance, by gas cutting or plasma cutting, has been performed.

Citation List

Patent Literature

PTL 1: Japanese Patent No. 6137053

Summary of Invention

Technical Problem

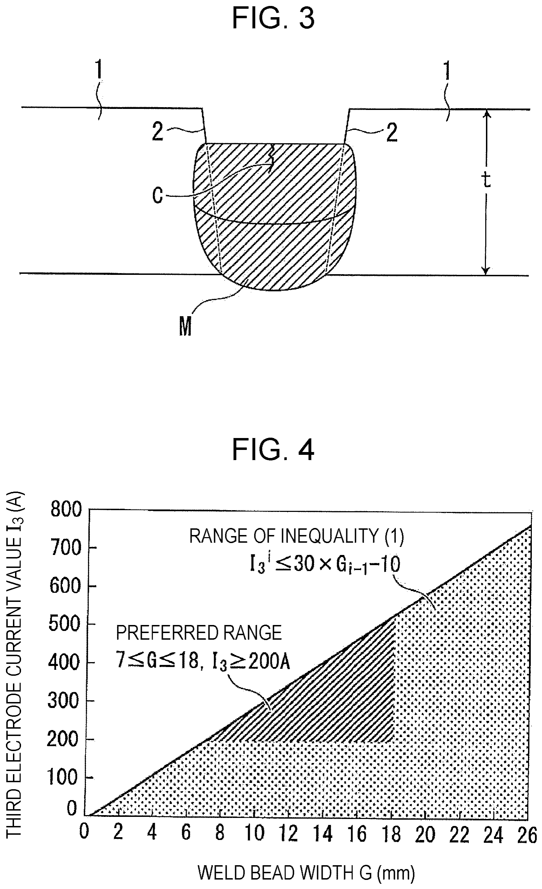

Unfortunately, the technology disclosed in Patent Literature 1 is limited to welding for forming the first layer, and, regarding welding for forming second and optionally additional layers, the technology may cause the formation of a hot crack C in a surface of a weld bead, as illustrated in Fig. 3. Thus, the technology is insufficient for preventing hot cracking.
An object of the present invention is to provide a welding method that solves the problem of the related art; the welding method is a multi-electrode narrow-groove gas-shielded arc welding method that can enable a high welding operation efficiency and can inhibit hot cracking.

Solution to Problem

To achieve the object, the present inventors diligently conducted studies regarding welding methods for inhibiting hot cracking, with the method of interest being three-electrode welding. As a result, the following findings were made: regarding welding for forming second and optionally additional layers, current values of the first electrode and the second electrode should be within a range of 260 A to 360 A, and the current value of the third electrode should be controlled in accordance with a width of a weld bead formed by welding for forming the immediately preceding layer, because the width constitutes the groove gap for the next welding; and, consequently, hot cracking can be inhibited.

The present invention was completed based on these findings and with further studies that were conducted. Specifically, primary features of the present invention are as follows.

[1] A narrow-groove gas-shielded arc welding method including joining steel plates together by narrow-groove multi-layer welding, the steel plates having a thickness t of 22 mm or greater, the narrow-groove multi-layer welding using a groove angle $\theta$ of 25° or less and a groove root gap $G_0$ of 7 mm to 18 mm, the narrow-groove gas-shielded arc welding method being a method adapted to be used for second and optionally additional layers associated with the multi-layer welding, wherein the multi-layer welding uses three electrodes; a current value $I_1$ of a first electrode and a current value $I_2$ of a second electrode are each within a range of 260 A to 360 A; and regarding an ith layer, a current value $I_3^i$ [A] of a third electrode is within a range that satisfies inequality (1), shown below:

$$I_3^i \leq 30 \times G_{i-1} - 10 \qquad (1)$$

where $I_3^i$ is the current value [A] of the third electrode regarding the ith layer, $G_{i-1}$ is a width [mm] of a weld bead formed by welding for forming a layer immediately preceding the ith layer (i-1th layer), and i is a positive integer equal to or greater than 2.

[2] The narrow-groove gas-shielded arc welding method according to [1], wherein one of the first electrode and the second electrode is electrode-negative (has straight polarity), and the other is electrode-positive (has reverse polarity); a distance a between ends of welding wires supplied through contact tips disposed at ends of respective welding torches of the first electrode and the second electrode is within a range of 5 mm to 16 mm; an angle $\alpha$ of a straight line with respect to a direction perpendicular to a weld line is 60° or less, where the straight line is a line connecting the ends of the welding wires of the first electrode and the second electrode to each other; a diameter of the welding wires of all of the electrodes is within a range of 1.0 mm to 1.6 mm; and a distance b between ends of the welding wires supplied through contact tips disposed at ends of respective welding torches of the second electrode and the third electrode is within a range of 10 mm to 100 mm.

[3] The narrow-groove gas-shielded arc welding method according to [1] or [2], wherein the third electrode is positioned behind the first electrode and the second electrode and in a middle of the groove.

[4] The narrow-groove gas-shielded arc welding method according to any one of [1] to [3], wherein a mixed gas containing $CO_2$ gas in an amount of 20 vol.% or greater is used as a shielding gas.

[5] The narrow-groove gas-shielded arc welding method according to any one of [1] to [4], wherein at least one welding wire used in a straight-polarity electrode contains one or more rare earth metals (REM) in an amount of 0.005 mass% to 0.060 mass%.

Advantageous Effects of Invention

Regarding a gas-shielded arc welding method for narrow-groove multi-layer welding, which has high welding efficiency, the present invention can perform the operation of welding for forming second and optionally additional layers while inhibiting hot cracking. In addition, a narrow-groove gas-shielded arc-welded joint produced by the operation has a significantly lower cost of manufacturing than existing welded joints and, therefore, has an effect in that it is very useful to employ the joint in general structures such as buildings, bridges, and ships, among others.

Brief Description of Drawings

[Fig. 1] Fig. 1 is a diagram schematically illustrating a shape of a groove of interest in the present invention; Fig. 1(a) is an example of a weld metal having a flat surface, Fig. 1(b) is an example of a weld metal having a convex surface, and Fig. 1(c) is an example of a weld metal having a concave surface.
[Fig. 2] Fig. 2 is a diagram illustrating an operation procedure for performing a welding operation with three electrodes; Fig. 2(a) is a front view, and Fig. 2(b) is a top view.

[Fig. 3] Fig. 3 is a diagram schematically illustrating an example of hot cracking that occurs in a weld metal layer.
[Fig. 4] Fig. 4 is a diagram illustrating a relationship between a width of a weld bead and a range of a current value of a third electrode.

Description of Embodiments

The present invention will be described in detail below.
The present invention is a narrow-groove gas-shielded arc welding method including joining steel plates together by narrow-groove multi-layer welding, the steel plates having a thickness t of 22 mm or greater, the narrow-groove multi-layer welding using a groove angle $\theta$ of 25° or less and a groove root gap $G_0$ of 7 mm to 18 mm. As referred to herein, "steel plates" include thick-walled steel materials, thick-plate steel materials, and the like.

[Thickness t of Steel Plate: 22 mm or greater]

The thickness t of a steel plate 1 is 22 mm or greater. When the thickness t is less than 22 mm, a conventional single bevel groove may have a smaller groove cross-sectional area than the groove of interest of the present invention in some cases in which the single bevel groove is formed to have a small groove gap, which can be achieved by increasing the groove angle; consequently, welding with the single bevel groove may provide higher efficiency and a lower amount of weld deposition than with the groove of interest. Preferably, the thickness t is 30 mm or greater.
Furthermore, since the steel plate thickness of steel structures, including special structures, is at most 200 mm, it is preferable that in the present invention, the upper limit of the thickness t of the steel plate be 200 mm.
Furthermore, the present invention can be applied to various types of steel plates, ranging from mild steel plates to 780 MPa-class high-tensile-strength steel plates. Even 590 MPa-class high-tensile-strength steel plates can be welded without being preheated.

[Groove Angle $\theta$: 25° or less]

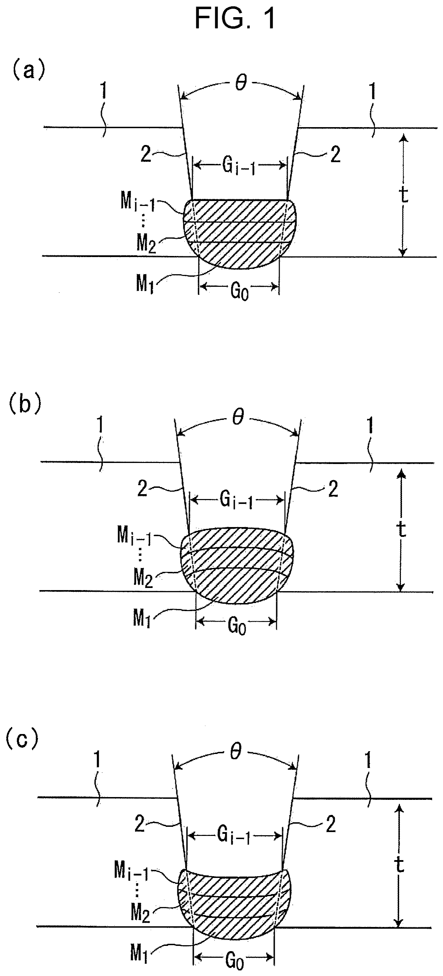

Regarding a shape of the groove used in the present invention, the groove is a narrow groove that is a V-shaped groove (which includes an I-shaped groove ($\theta = 0°$)) and has a gap in the root. Fig. 1 illustrates an example of the shape of the groove. In the figure, the steel plate (base steel) is indicated by 1, and a groove surface is indicated by 2. Regarding a groove cross-sectional area of a groove portion of the steel plate, the smaller the cross-sectional area, the faster and more efficiently the welding can be performed, but the greater the likelihood of the occurrence of defects, such as lack of fusion. When the groove angle $\theta$ of the groove portion is greater than 25°, welding can be carried out by a conventional operation method. Accordingly, the present invention is directed to cases where the groove is a narrow groove having a groove angle $\theta$ of 25° or less, which are cases where operation with a conventional operation method is difficult and which are expected to provide higher efficiency. Regarding the V-shaped groove, when the groove angle $\theta$ is 0°, the groove is called an I-shaped groove. This case of 0° provides the maximum efficiency in terms of the amount of weld deposition. However, welding heat distortion may cause the groove to close during welding, and, therefore, it is preferable to take this into account and set a groove angle $\theta$ in accordance with the thickness t. When the thickness t is greater than 100 mm, it is preferable that the upper limit of the preferred range be 10°. More preferably, the groove angle $\theta$ is 5° to 10°.

[Groove Root Gap $G_0$: 7 mm to 18 mm]

Regarding the groove portion of the steel plate, the smaller it is, the faster and more efficiently the welding can be performed, but the greater the likelihood of the occurrence of defects, such as lack of fusion. When the groove root gap $G_0$, which is a gap (groove width) between root portions of the groove portions before the start of the welding, is greater than 18 mm, welding can be carried out by a conventional operation method. Accordingly, the present invention is directed to cases where the groove root gap $G_0$ is 18 mm or less, which are cases that are expected to provide higher efficiency than a conventional operation method. On the other hand, when the groove root gap $G_0$ is less than 7 mm, it may be difficult to perform a welding operation with three electrodes. Accordingly, the groove root gap $G_0$ is specified to be within the range of 7 mm to 18 mm. Preferably, the range is 8 mm to 12 mm.

[Multi-Layer Welding]

The present invention provides a welding method that accomplishes the joining by performing multi-layer welding with the narrow groove described above, by using three electrodes for all of a first layer, a second layer, and optionally additional layers, and the welding method is particularly suitable for welding for forming second and optionally additional layers. Assuming that the number of layers for the multi-layer welding is n, the layers range from the first layer (initial layer) to the nth layer (final layer). When an intermediate layer is designated as an ith layer, the layer immediately preceding the ith layer is an i-1th layer.

[Current Value of Electrode]

A current value $I_1$, which is a current value of a first electrode, and a current value $I_2$, which is a current value of a second electrode, are each specified to be within a range of 260 A to 360 A. When the current value $I_1$ of the first electrode and the current value $I_2$ of the second electrode are less than 260 A, sufficient melting cannot be achieved on the groove surface, which increases the possibility of the occurrence of lack of fusion. On the other hand, when the current values are greater than 360 A, a height of the weld bead increases, and the resulting bead is vertically elongated, which increases the possibility of hot cracking. Accordingly, the ranges of the current value $I_1$ of the first electrode and the current value $I_2$ of the second electrode are each specified to be 260 A to 360 A. Preferably, the range is 270 A to 340 A.

A current value $I_3$ is a current value of a third electrode and is controlled for each of the layers of the multi-layer welding, based on a relationship with a width of the weld bead of each of the layers. The present inventors found that with this control, the inhibition of the occurrence of hot cracking in each of the welding layers, which is sought by the present invention, can be achieved. Specifically, regarding the ith layer, the current value $I_3^i$ of the third electrode is specified to be within a range that satisfies inequality (1), shown below.

$$I_3^i \leq 30 \times G_{i-1} - 10 \qquad (1)$$

In the inequality, $I_3^i$ is the current value [A] of the third electrode regarding the ith layer, $G_{i-1}$ is the width [mm] of the weld bead formed by welding for forming the layer immediately preceding the ith layer (i-1th layer), and i is a positive integer equal to or greater than 2.

When the current value $I_3^i$ of the third electrode is high, the height of the weld bead increases, and the resulting bead is vertically elongated, which increases the possibility of hot cracking. Regarding the width $G_i$ of the weld bead, the width increases with the increase of the number of layers because the width is affected by the width $G_{i-1}$ of the weld bead formed by welding for forming the immediately preceding layer (i-1th layer). Thus, studies were conducted on a relationship between the width of the weld bead and the current value of the third electrode, and as a result, it was found that a range shown in Fig. 4 is favorable, and based on this, inequality (1), shown above, was derived. That is, when the current value was within a range that satisfied inequality (1), a superior effect was observed in that the formation of a vertically elongated weld bead was inhibited and that hot cracking was prevented.

[Welding Conditions for First Layer]

A feature of the narrow-groove gas-shielded arc welding method according to the present invention is the above-described controlling of the current value for each of the electrodes, which is a condition employed for the second and optionally additional layers. Accordingly, in the welding method of the present invention, conditions for welding for forming the first layer are not particularly limited. The welding conditions for the first layer, however, may be the same as the welding conditions employed in the present invention for the second and optionally additional layers. Furthermore, regarding the welding for forming the first layer, the current value $I_3^1$ of the third electrode may be within the same range (260 A to 360 A) as that of the current value $I_1$ of the first electrode and the current value $I_2$ of the second electrode.

Preferred welding conditions employed for the second and optionally additional layers will be described sequentially below. Preferably, the following conditions are also used as the welding conditions for the first layer.

[Polarity of Electrodes]

When the first electrode and the second electrode have the same polarity (e.g., both the first electrode and the second electrode are electrode-positive), an attractive electromagnetic force causes both of their arcs to be deflected inward, which results in a concentration of heat in a middle of the groove. As a result, sufficient melting cannot be achieved on the groove surface. In contrast, in cases where one of the first electrode and the second electrode is electrode-negative (has straight polarity), and the other is electrode-positive (has reverse polarity) and where the positions of the first electrode and the second electrode are appropriately controlled, both of their magnetic fields due to the welding current generate a strong outward electromagnetic force, which results in repulsion between the arcs. As a result, a sufficient melt depth can be achieved on the groove surface. Thus, in the present invention, it is preferable that one of the first electrode and the second electrode be electrode-negative (have straight polarity) and that the other be electrode-positive (have reverse polarity). The polarity of a third electrode 5 is not particularly limited and may be electrode-negative (have straight polarity) or electrode-positive (have reverse polarity).

[Positions of First Electrode and Second Electrode]

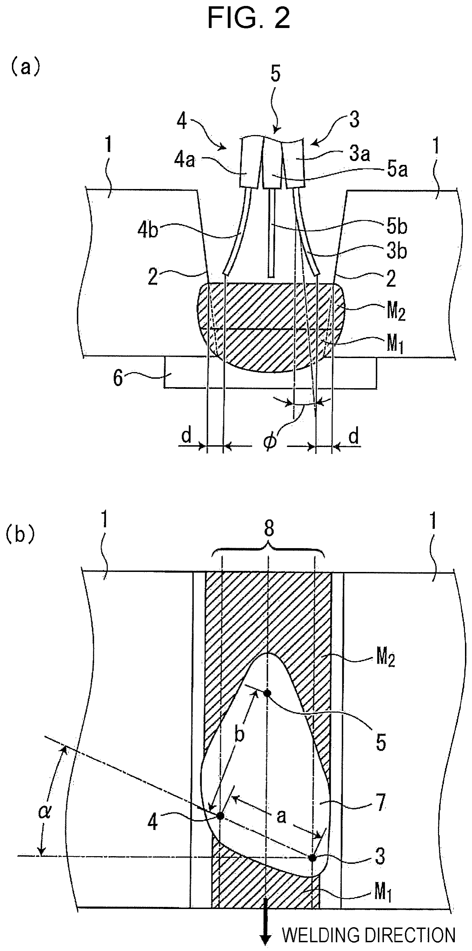

In the case where narrow-groove multi-layer welding is performed with a single pass per layer, when only one electrode is used, the welding heat tends to be concentrated in a middle of the grove, which results in insufficient melting on the groove surface of the steel plates; consequently, defects due to incomplete fusion (cold lap), spatter deposited on the groove surface, slag entrainment, or the like are likely to occur. In particular, regarding the welding for forming the first layer, defects due to lack of fusion are likely to occur because the temperature of the steel plates is low, and the melt depth is small. Accordingly, in the present invention, it is preferable that, as illustrated in Fig. 2, the first electrode 3 and the second electrode 4 of the three electrodes be located at positions along the weld lines 8, which are predetermined parallel weld lines. A backing member is indicated by 6, a molten pool is indicated by 7, the first layer (initial layer) of a weld metal is indicated by $M_1$, and the second layer of the weld metal is indicated by $M_2$.

[Distance a Between Ends of Welding Wires of First Electrode and Second Electrode: 5 mm to 16 mm]

Preferably, a distance a is adjusted to be within a range of 5 mm to 16mm, where the distance a is a distance between ends of welding wires 3b and 4b, which are supplied through contact tips 3a and 4a, which are disposed at ends of respective welding torches of the first electrode 3 and the second electrode 4 (hereinafter, this distance is also simply referred to as a "first electrode-to-second electrode distance", see Fig. 2(b)). As referred to herein, the "distance between ends of the welding wires" is a distance between respective centers of the ends of the welding wires of the electrodes.
When the first electrode-to-second electrode distance a is less than 5 mm, a current (electrons) flows between the electrodes, which decreases heat present in the arcs, and as a result, sufficient melting cannot be achieved on the groove surface 2. On the other hand, when the first electrode-to-second electrode distance a is greater than 16 mm, an outward electromagnetic force between the electrodes decreases in inverse proportion to the distance, thus, an arc repulsive force for overcoming an inward electromagnetic force generated by a current flowing along the groove surface 2 cannot be obtained, and, consequently, both of their arcs are deflected inward, which results in a concentration of heat in a middle of the groove. This is because, as a result, sufficient melting cannot be achieved on the groove surface 2. Furthermore, one challenge with narrow-groove welding is the inhibition of welding defects due to spatter deposited on the groove surface 2. However, because of the positioning of the first electrode 3 and the second electrode 4 along the predetermined parallel weld lines 8, 8, the polarities in which one of the electrodes is electrode-negative (has straight polarity) and in which the other is electrode-positive (has reverse polarity), and the first electrode-to-second electrode distance a adjusted to be within the range of 5 mm to 16 mm, it is possible to allow spatter to be absorbed into each of the molten metals, which results in inhibition of the deposition of spatter onto the groove surface, and, consequently, a sound weld can be obtained. Thus, it is preferable that the first electrode-to-second electrode distance a be adjusted to be within the range of 5 mm to 16 mm.

[Angle $\alpha$ of Straight Line Connecting Ends of Welding Wires of First Electrode and Second Electrode: 60° or less]

In the present invention, the melting of the groove surface is ensured by utilizing repulsion between the arcs. When an angle $\alpha$ of a straight line with respect to a direction perpendicular to the weld line is greater than 60°, where the straight line is a line connecting the ends of the welding wires of the first electrode 3 and the second electrode 4 to each other, a sufficient repulsive force between the arcs is not generated, and, consequently, sufficient melting cannot be achieved on the groove surface. Accordingly, it is preferable that the angle $\alpha$, with respect to the direction perpendicular to the weld line 8, of the straight line connecting the ends of the welding wires of the first electrode 3 and the second electrode 4 (hereinafter, this angle is also simply referred to as a "first electrode and second electrode positioning angle", see Fig. 2(b)) be 60° or less. More preferably, the angle $\alpha$ is 55° or less. The first electrode and second electrode positioning angle $\alpha$ may be 0°.

[Diameter of Welding Wire: 1.0 mm to 1.6 mm]

Typically, welding wires for narrow-groove gas-shielded arc welding are manufactured with a diameter within a range of 0.6 mm to 2.0 mm. In general, the smaller the wire diameter, the higher the deposition rate due to Joule heating, provided that the same current is used for welding. Accordingly, it is preferable to select a relatively small wire diameter so as to realize a high-efficiency welding operation. On the other hand, when the wire diameter is excessively small, Joule heating causes the wire to be softened, which results in unstable welding. Accordingly, it is preferable that the diameter of the welding wires used in the present invention be within a range of 1.0 mm to 1.6 mm.

[Distance b Between Ends of Welding Wires of Second Electrode and Third Electrodes: 10 mm to 100 mm]

A distance b is a distance between ends of welding wires 4b and 5b, which are supplied through contact tips 4a and 5a, which are disposed at ends of respective welding torches of the second electrode 4 and the third electrode 5 (hereinafter, this distance is also simply referred to as a "second electrode-to-third electrode distance". See Fig. 2(b)). Preferably, the distance b is within a range of 10 mm to 100 mm. This is because when the distance is within this range, resistance to hot cracking is improved. More preferably, the distance is 12 mm to 80 mm.

[Position of Third Electrode]

Regarding the welding for forming the first layer, when a weld deposit height is greater than the groove root gap $G_0$, the possibility of hot cracking increases. An effective way to avoid this is to position the third electrode 5 behind the first electrode 3 and the second electrode 4 and in a middle of the groove. In addition, the number of layers can be consequently further reduced, which can significantly reduce the possibility of stacking defects associated with multi-layer welding. As referred to herein, the "middle of the groove" may include a region $\pm 10\%$ or less from the middle of the groove portion in the groove root gap $G_0$.

[Shielding Gas: Mixed Gas Containing $CO_2$ Gas in Amount of 20 vol.% or Greater]

An oxygen content of the weld metal is significantly affected by a composition of a shielding gas, and, therefore, the shielding gas to be used for the narrow-groove gas-shielded arc welding of the present invention is preferably a mixed gas containing $CO_2$ gas in an amount of 20 vol.% or greater, with the balance being an inert gas, such as Ar. More preferably, the shielding gas is a single gas containing $CO_2$ gas in an amount of 100 vol.%. In the present invention, it is preferable that a concentration of oxygen in the weld metal, which dominates the melt fluidity of the weld metal, be high so that the convection of the weld metal can be directed outward from a middle and, thus, that a large melt depth can be consistently achieved in a root portion of the steel plates in the groove.

[REM Content of Welding Wire: 0.005 mass% to 0.060 mass%]

Rare earth metals (REM) are elements effective for refining inclusions present in the weld metal and improving toughness for a welding operation. A welding wire containing REM may be supplied to a straight-polarity electrode to perform welding; in this case, fine droplets can be obtained, and stable transfer of the droplets can be achieved. This transfer of fine droplets inhibits the occurrence of spattering and enables stable gas-shielded arc welding even with straight polarity. Thus, in the present invention, it is preferable that a steel wire containing one or more rare earth metals (REM) in an amount of 0.005 mass% to 0.060 mass% be supplied to a straight-polarity electrode. Elements other than rare earth metals (REM) are present in appropriate amounts that are typical and in accordance with a grade (steel grade) of the welding wire, as described in JIS Z 3312.

When the rare earth metals (REM) content is less than 0.005 mass%, the obtaining of fine droplets and the achievement of stable transfer of droplets are difficult. On the other hand, when the rare earth metals are present in an amount greater than 0.060 mass%, cracking occurs during the process of manufacturing the wire, and as a result, the manufacture of the welding wire becomes difficult. Accordingly, the rare earth metals (REM) content is preferably within a range of 0.005 mass% to 0.060 mass%. More preferably, the rare earth metals (REM) content is 0.010 mass% to 0.055 mass%.

[Other Welding Conditions]

In the present invention, conditions other than the above-described welding conditions need not be particularly limited and may be those in accordance with a common procedure. Examples of the conditions include a welding voltage of 32 V to 37 V, a welding speed of 30 cm/min to 90 cm/min, a welding wire protrusion length of 15 mm to 30 mm, and a welding heat input per pass of 10 kJ/cm to 50 kJ/cm.

Furthermore, in cases where other welding conditions, described below, are satisfied, the welding operation can be carried out more efficiently while hot cracking is inhibited to a greater degree.

[Supply Angle $\varphi$ for Supplying Welding Wires Toward Root of Groove: 0° to 15° with respect to perpendicular line]

Arcs have a directionality, that is, have a property of tending to be oriented in a direction to which each of the ends of electrodes (welding wires) points. An advantageous way to effectively utilize the directionality of arcs for the melting of the groove surface is to enable the direction to which each of the ends of the electrodes points to be oriented toward the groove surface, and the direction to which each of the ends of the electrodes points significantly depends on the supply angle φ for supplying the welding wires through the contact tips disposed at the ends of the respective welding torches. The supply angle φ for supplying the welding wires toward the root of the groove through the contact tips disposed at the ends of the respective welding torches is illustrated in Fig. 2(a).

When the supply angle φ for supplying each of the welding wires 3b and 4b toward the root of the groove through the contact tips 3a and 4a disposed at the ends of the respective welding torches is less than 0° with respect to the perpendicular line, a current flows to a path having a lower resistance. As a result, the arc climbs upward (arc climbing) along the wires, which are electrodes, and, consequently, it becomes difficult to maintain the melt in a target portion of the groove surface 2, in particular, in a root portion. On the other hand, when the supply angle φ for supplying the welding wires toward the root of the groove through the contact tips is greater than 15° with respect to the perpendicular line, the arcs point to the groove surface 2 to an excessive extent, which leads to a convex shape of the weld bead; consequently, regarding the welding for forming the first layer and additional layers, melting by the arcs is not sufficiently achieved, which increases the likelihood of the occurrence of welding defects. Accordingly, the supply angle φ for supplying each of the welding wires 3b and 4b of the first electrode 3 and the second electrode 4 toward the root of the groove is preferably within a range of 0° to 15° with respect to the perpendicular line. More preferably, the supply angle φ is 5° to 12°.

The supply angle φ for supplying each of the welding wires of the first electrode 3 and the second electrode 4 toward the root of the groove is the same as a slope of the contact tips 3a and 4a, particularly, a slope of the ends of the contact tips, and, accordingly, the supply angle φ for supplying the welding wire can be controlled with the slope of the ends of the contact tips. Regarding the supply angle φ, a direction pointing to a corresponding portion of the groove surface is designated as "+". As referred to herein, the "perpendicular line" is a line perpendicular to the root of the groove.

[Distance d Between Side Edge Portion at End of Welding Wire and Corresponding Root Portion of Groove Surface: 0.1 mm to 3.0 mm]

A distance d, which is illustrated in Fig. 2(a), is a distance between a side edge portion at the end of each of the welding wires of the first electrode 3 and the second electrode 4 and a corresponding root portion of the groove surface 2. Preferably, the distance d is 0.1 mm to 3.0 mm. When the distance d, which is a distance between a side edge portion at the end of each of the welding wires 3b and 4b and a corresponding root portion of the groove surface 2, at the root of the groove, is less than 0.1 mm, the arc is formed between an upper portion of the wire and the groove surface 2, and, consequently, the groove surface 2 cannot be efficiently melted in the root portion. On the other hand, when the distance d is greater than 3.0 mm, the arc is distant from the groove surface 2, and, consequently, the groove surface 2 cannot be efficiently melted. Accordingly, the distance d, which is a distance between a side edge portion at the end of each of the welding wires and a corresponding root portion of the groove surface, is preferably 0.1 mm to 3.0 mm. More preferably, the distance d is 0.5 mm to 2.0 mm, and even more preferably, 0.5 mm to 1.0 mm. The "side edge portion at the end of the welding wire" is a side edge portion closer to the groove surface 2 in root portions of the steel plates that are to be melted by the respective electrodes.

[Radius of Curvature of Welding Wires to Be Fed to Contact Tips: 150 mm to 500 mm]

The present invention uses contact tips having a bent end. This is to control the supply angle φ for supplying the welding wires 3b and 4b through the contact tips 3a and 4a disposed at the ends of the respective welding torches of the first electrode 3 and the second electrode 4. Thus, the welding wires pass through the contact tips having a bent end. It is, therefore, preferable that the welding wires be bent beforehand with a so-called three roll bending machine, or the like, so as to be more smoothly passed through the contact tips. When the radius of curvature of the welding wires is less than 150 mm, wire feeding resistance increases, and, therefore, the welding wires cannot be stably fed, which makes it difficult to maintain the arc. On the other hand, when the radius of curvature of the welding wires is greater than 500 mm, the effect of reducing the wire feeding resistance due to a contact tip having a bent end is not produced, and, therefore, the welding wires also cannot be stably fed, which makes it difficult to maintain the arc. Thus, it is preferable that the radius of curvature of the welding wires 3b and 4b to be fed to the contact tips 3a and 4a of the first electrode 3 and the second electrode 4 be 150 mm to 500 mm. More preferably, the radius of curvature is 175 mm to 475 mm.

EXAMPLES

The present invention will now be further described based on Examples. Note that the Examples below are provided merely to illustrate the present invention in more detail and are not intended to limit the scope of the present invention.

Steel plates (base steels) having respective shapes of grooves were prepared by groove cutting that used gas cutting. Multi-layer welding was performed on the steel plates, and a test for measuring the shape of the groove of each of the second and optionally additional layers was conducted (joints Nos. 1 to 12). Table 1 shows the shape of the groove and welding conditions for the first electrode to third electrode regarding each of the second and optionally additional layers.

For each of the layers formed by welding, the weld metal layer was cut, and a cross section of the weld was etched with nital. Subsequently, an investigation was performed on each of the layers to see whether hot cracking occurred. The results are also shown in Table 1.

Conditions other than the welding conditions shown in Table 1 are as follows. Regarding the steel grade (grade), the steel plates used range from 490 MPa-class steel to 590 MPa-class steel. The thickness t of the steel plates is 30 mm to 100 mm. The steel grade (grade) of the welding wires used is YGW18, and the diameter of the welding wires is 1.2 mm.

The first electrode-to-second electrode distance a is 14 mm, the second electrode-to-third electrode distance b is 16 mm, the first electrode and second electrode positioning angle $\alpha$ is 55°.

The welding speed is 60 cm/min, and the amount of welding heat input is 28 kJ/cm to 41 kJ/cm.

The REM content of the welding wires used in electrodes that were electrode-negative is 0.025 mass% to 0.030 mass%.

The supply angle $\varphi$ for supplying the welding wire is 8°, the distance d between a side edge portion at the end of the welding wire and a corresponding portion of the groove surface is 0.5 mm, and the radius of curvature of the welding wire is 300 mm.

[Table 1]

| Joint No. | Steel Grade (grade) | Thickness t (mm) | Test No. | Layer | Shape of Groove — Shape | Groove Angle θ (°) | Groove Root Gap G$_0$ (mm) | Width of Weld bead of Immediately Preceding Layer G$_{i-1}$ (mm) | Composition of Shielding Gas (vol.%) | Welding Speed (cm/min) | First Electrode — Polarity | First Electrode — Current (A) | First Electrode — Voltage (V) | Second Electrode — Polarity | Second Electrode — Current (A) | Second Electrode — Voltage (V) | Third Electrode — Polarity | Third Electrode — Current (A) | Third Electrode — Voltage (V) | Compatibility with Inequality (1) | Presence of Hot Crack | Remarks |
|---|---|---|---|---|---|---|---|---|---|---|---|---|---|---|---|---|---|---|---|---|---|---|
| 1 | 490 MPa-Class Steel | 50 | 1 | 2nd Layer | V-Shape | 10 | 8.0 | 9.0 | 80% Ar-20% $CO_2$ | 60 | Electrode-Negative | 295 | 33 | Electrode-Positive | 290 | 34 | Electrode-Negative | 255 | 35 | Compatible | No | Invention Example |
| | | | 2 | 3rd Layer | V-Shape | 10 | | 10.0 | 80% Ar-20% $CO_2$ | 60 | Electrode-Negative | 295 | 33 | Electrode-Positive | 290 | 34 | Electrode-Negative | 270 | 35 | Compatible | No | Invention Example |
| | | | 3 | 4th Layer | V-Shape | 10 | | 11.0 | 80% Ar-20% $CO_2$ | 60 | Electrode-Negative | 295 | 33 | Electrode-Positive | 290 | 34 | Electrode-Negative | 280 | 35 | Compatible | No | Invention Example |
| 2 | 520 MPa-Class Steel | 50 | 4 | 2nd Layer | V-Shape | 8 | 9.0 | 10.0 | 100% $CO_2$ | 60 | Electrode-Negative | 320 | 35 | Electrode-Positive | 315 | 35 | Electrode-Positive | 285 | 33 | Compatible | No | Invention Example |
| | | | 5 | 3rd Layer | V-Shape | 8 | | 11.0 | 100% $CO_2$ | 60 | Electrode-Negative | 320 | 35 | Electrode-Positive | 315 | 35 | Electrode-Positive | 290 | 33 | Compatible | No | Invention Example |
| 3 | 490 MPa-Class Steel | 30 | 6 | 2nd Layer | I-Shape | 0 | 12.0 | 12.0 | 100% $CO_2$ | 60 | Electrode-Negative | 305 | 35 | Electrode-Positive | 295 | 36 | Electrode-Negative | 315 | 33 | Compatible | No | Invention Example |

| Joint No. | Steel Grade (grade) | Thickness t (mm) | Test No. | Layer | Shape of Groove | | | | Composition of Shielding Gas (vol.%) | Welding Speed (cm/min) | Welding Conditions for First Electrode | | | Welding Conditions for Second Electrode | | | Welding Conditions for Third Electrode | | | Compatibility with Inequality (1) | Presence of Hot Crack | Remarks |
|---|---|---|---|---|---|---|---|---|---|---|---|---|---|---|---|---|---|---|---|---|---|---|
| | | | | | Shape | Groove Angle $\theta$ (°) | Groove Root Gap $G_0$ (mm) | Width of Weld bead of Immediately Preceding Layer $G_{i-1}$ (mm) | | | Polarity | Current (A) | Voltage (V) | Polarity | Current (A) | Voltage (V) | Polarity | Current (A) | Voltage (V) | | | |
| 4 | 520 MPa-Class Steel | 100 | 7 | 2nd Layer | V Shape | 5 | 9.5 | 10.0 | 100%$CO_2$ | 60 | Electrode-Negative | 320 | 35 | Electrode-Positive | 315 | 35 | Electrode-Negative | 285 | 33 | Compatible | No | Invention Example |
| | | | 8 | 3rd Layer | V Shape | 5 | | 10.5 | 100%$CO_2$ | 60 | Electrode-Negative | 320 | 35 | Electrode-Positive | 315 | 35 | Electrode-Negative | 285 | 33 | Compatible | No | Invention Example |
| 5 | 550 MPa-Class Steel | 80 | 9 | 2nd Layer | V Shape | 6 | 10.5 | 11.0 | 100%$CO_2$ | 60 | Electrode-Negative | 290 | 33 | Electrode-Positive | 285 | 34 | Electrode-Negative | 300 | 30 | Compatible | No | Invention Example |
| | | | 10 | 3rd Layer | V Shape | 6 | | 12.0 | 100%$CO_2$ | 60 | Electrode-Negative | 290 | 33 | Electrode-Positive | 285 | 34 | Electrode-Negative | 310 | 32 | Compatible | No | Invention Example |
| 6 | 590 MPa-Class Steel | 65 | 11 | 2nd Layer | V Shape | 8 | 12.0 | 13.0 | 100%$CO_2$ | 60 | Electrode-Negative | 320 | 32 | Electrode-Positive | 320 | 34 | Electrode-Negative | 350 | 34 | Compatible | No | Invention Example |
| | | | 12 | 3rd Layer | V Shape | 8 | | 135 | 100%$CO_2$ | 60 | Electrode-Negative | 320 | 32 | Electrode-Positive | 320 | 34 | Electrode-Negative | 350 | 34 | Compatible | No | Invention Example |

(continued)

| Joint No. | Steel Grade (grade) | Thickness t (mm) | Test No. | Layer | Shape of Groove — Shape | Groove Angle θ (°) | Groove Root Gap $G_0$ (mm) | Width of Weld bead of Immediately Preceding Layer $G_{i-1}$ (mm) | Composition of Shielding Gas (vol.%) | Welding Speed (cm/min) | First Electrode — Polarity | First Electrode — Current (A) | First Electrode — Voltage (V) | Second Electrode — Polarity | Second Electrode — Current (A) | Second Electrode — Voltage (V) | Third Electrode — Polarity | Third Electrode — Current (A) | Third Electrode — Voltage (V) | Compatibility with Inequality (1) | Presence of Hot Crack | Remarks |
|---|---|---|---|---|---|---|---|---|---|---|---|---|---|---|---|---|---|---|---|---|---|---|
| 7 | 490 MPa-Class Steel | 50 | 13 | 2nd Layer | V-Shape | 5 | 10.5 | 11.0 | 100%$CO_2$ | 60 | Electrode-Negative | 300 | 33 | Electrode-Positive | 300 | 34 | Electrode-Positive | 310 | 32 | Compatible | No | Invention Example |
| 7 | 490 MPa-Class Steel | 50 | 14 | 3rd Layer | V-Shape | 5 | 10.5 | 11.5 | 100%$CO_2$ | 60 | Electrode-Negative | 300 | 33 | Electrode-Positive | 300 | 34 | Electrode-Positive | 280 | 32 | Compatible | No | Invention Example |
| 8 | 490 MPa-Class Steel | 35 | 15 | 2nd Layer | V-Shape | 8 | 10.0 | 11.0 | 20% Ar-80% $CO_2$ | 60 | Electrode-Negative | 290 | 33 | Electrode-Positive | 290 | 34 | Electrode-Negative | 310 | 35 | Compatible | No | Invention Example |
| 9 | 520 MPa-Class Steel | 85 | 16 | 2nd Layer | V-Shape | 5 | 10.0 | 10.5 | 40% Ar-60% $CO_2$ | 60 | Electrode-Negative | 285 | 32 | Electrode-Positive | 285 | 33 | Electrode-Negative | 295 | 32 | Compatible | No | Invention Example |
| 10 | 520 MPa-Class Steel | 100 | 17 | 2nd Layer | V-Shape | 5 | 9.0 | 10.0 | 100%$CO_2$ | 60 | Electrode-Negative | 330 | 33 | Electrode-Positive | 365 | 34 | Electrode-Positive | 285 | 32 | Compatible | Yes | Comparative Example |
| 10 | 520 MPa-Class Steel | 100 | 18 | 3rd Layer | V-Shape | 5 | 9.0 | 10.5 | 100%$CO_2$ | 60 | Electrode-Negative | 330 | 33 | Electrode-Positive | 365 | 34 | Electrode-Positive | 295 | 33 | Compatible | Yes | Comparative Example |

(continued)

| Joint No. | Steel Grade (grade) | Thickness t (mm) | Test No. | Layer | Shape of Groove | | | | Composition of Shielding Gas (vol.%) | Welding Speed (cm/min) | Welding Conditions for First Electrode | | | Welding Conditions for Second Electrode | | | Welding Conditions for Third Electrode | | | Compatibility with Inequality (1) | Presence of Hot Crack | Remarks |
|---|---|---|---|---|---|---|---|---|---|---|---|---|---|---|---|---|---|---|---|---|---|---|
| | | | | | Shape | Groove Angle $\theta$ (°) | Groove Root Gap $G_0$ (mm) | Width of Weld bead of Immediately Preceding Layer $G_{i-1}$ (mm) | | | Polarity | Current (A) | Voltage (V) | Polarity | Current (A) | Voltage (V) | Polarity | Current (A) | Voltage (V) | | | |
| 11 | 490 MPa-Class Steel | 50 | 19 | 2nd Layer | V Shape | 4 | 8.5 | 9.0 | 100%$CO_2$ | 60 | Electrode-Negative | 340 | 34 | Electrode-Positive | 315 | 33 | Electrode-Negative | 290 | 33 | Non-Compatible | Yes | Comparative Example |
| | | | 20 | 3rd Layer | V Shape | 4 | | 9.5 | 100%$CO_2$ | 60 | Electrode-Negative | 340 | 34 | Electrode-Positive | 315 | 33 | Electrode-Negative | 310 | 35 | Non-Compatible | Yes | Comparative Example |
| 12 | 520 MPa-Class Steel | 30 | 21 | 2nd Layer | I Shape | 0 | 10.0 | 10.0 | 80% Ar-20% $CO_2$ | 60 | Electrode-Negative | 400 | 37 | Electrode-Positive | 410 | 39 | Electrode-Negative | 330 | 30 | Non-Compatible | Yes | Comparative Example |

14

**EP 4 670 894 A1**

In all of the Invention Examples, the occurrence of hot cracking was not observed despite the fact that the welding performed was multi-layer welding that used three electrodes and a narrow groove. In contrast, in Comparative Examples, which fell outside the scope of the present invention, hot cracking occurred, and thus, a sound narrow-groove gas-shielded arc-welded joint could not be obtained.

Reference Signs List

1 steel plate (base steel)
2 groove surface
3 first electrode
4 second electrode
5 third electrode
6 backing member
3a, 4a, 5a contact tip
3b, 4b, 5b welding wire
7 molten pool
8 weld line
t thickness, $\theta$ groove angle
C hot crack
M weld metal
$M_1$ first layer, $M_2$ second layer, $M_{i-1}$ layer immediately preceding ith layer, $M^i$ ith layer, $G_0$ groove root gap, $G_1$ width of weld bead of first layer, $G_{i-1}$ width of weld bead of i-1th layer, $G_i$ width of weld bead of ith layer

**Claims**

1. A narrow-groove gas-shielded arc welding method comprising joining steel plates together by narrow-groove multi-layer welding, the steel plates having a thickness t of 22 mm or greater, the narrow-groove multi-layer welding using a groove angle $\theta$ of 25° or less and a groove root gap $G_0$ of 7 mm to 18 mm, the narrow-groove gas-shielded arc welding method being a method adapted to be used for second and optionally additional layers associated with the multi-layer welding, wherein

   the multi-layer welding uses three electrodes,
   a current value $I_1$ of a first electrode and a current value $I_2$ of a second electrode are each within a range of 260 A to 360 A, and
   regarding an ith layer, a current value $I_3^i$ [A] of a third electrode is within a range that satisfies inequality (1), shown below:

$$I_3^i \leq 30 \times G_{i-1} - 10 \qquad (1)$$

   where $I_3^i$ is the current value [A] of the third electrode regarding the ith layer, $G_{i-1}$ is a width [mm] of a weld bead formed by welding for forming a layer immediately preceding the ith layer (i-1th layer), and i is a positive integer equal to or greater than 2.

2. The narrow-groove gas-shielded arc welding method according to Claim 1, wherein

   one of the first electrode and the second electrode is electrode-negative (has straight polarity), and the other is electrode-positive (has reverse polarity),
   a distance a between ends of welding wires supplied through contact tips disposed at ends of respective welding torches of the first electrode and the second electrode is within a range of 5 mm to 16 mm,
   an angle $\alpha$ of a straight line with respect to a direction perpendicular to a weld line is 60° or less, where the straight line is a line connecting the ends of the welding wires of the first electrode and the second electrode to each other,
   a diameter of the welding wires of all of the electrodes is within a range of 1.0 mm to 1.6 mm, and
   a distance b between ends of the welding wires supplied through contact tips disposed at ends of respective welding torches of the second electrode and the third electrode is within a range of 10 mm to 100 mm.

3. The narrow-groove gas-shielded arc welding method according to Claim 1 or 2, wherein the third electrode is positioned behind the first electrode and the second electrode and in a middle of the groove.

4. The narrow-groove gas-shielded arc welding method according to any one of Claims 1 to 3, wherein a mixed gas containing $CO_2$ gas in an amount of 20 vol.% or greater is used as a shielding gas.

5. The narrow-groove gas-shielded arc welding method according to any one of Claims 1 to 4, wherein at least one welding wire used in a straight-polarity electrode contains one or more rare earth metals (REM) in an amount of 0.005 mass% to 0.060 mass%.

# FIG. 1

(a)

(b)

(c)

# FIG. 2

(a)

(b)

WELDING DIRECTION

# FIG. 3

# FIG. 4

## INTERNATIONAL SEARCH REPORT

| International application No. |
| --- |
| **PCT/JP2024/010617** |

**A. CLASSIFICATION OF SUBJECT MATTER**

***B23K 9/173***(2006.01)i; ***B23K 9/00***(2006.01)i; ***B23K 9/16***(2006.01)i; ***B23K 35/30***(2006.01)i
FI:   B23K9/173 D; B23K9/173 E; B23K9/16 J; B23K9/00 109; B23K35/30 320A

According to International Patent Classification (IPC) or to both national classification and IPC

**B. FIELDS SEARCHED**

Minimum documentation searched (classification system followed by classification symbols)

B23K9/173; B23K9/00; B23K9/16; B23K35/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-223605 A (JFE STEEL CORPORATION) 14 December 2015 (2015-12-14) paragraphs [0022]-[0054], fig. 1-6 | 1-5 |
| A | JP 11-129072 A (NIPPON STEEL WELD PROD & ENG CO., LTD.) 18 May 1999 (1999-05-18) paragraphs [0013]-[0057], fig. 1-3 | 1-5 |
| A | JP 2011-031250 A (JFE ENGINEERING CORPORATION) 17 February 2011 (2011-02-17) paragraphs [0027]-[0030], fig. 7-10 | 1-5 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **02 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/010617**

| Patent document cited in search report | | | Publication date (day/month/year) | Patent family member(s) | Publication date (day/month/year) |
|---|---|---|---|---|---|
| JP | 2015-223605 | A | 14 December 2015 | (Family: none) | |
| JP | 11-129072 | A | 18 May 1999 | (Family: none) | |
| JP | 2011-031250 | A | 17 February 2011 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6137053 B